# NEUE EUROPÄISCHE PATENTSCHRIFT

(11) **EP 1 697 109 B2**
(45) Veröffentlichungstag und Bekanntmachung des Hinweises auf die Entscheidung über den Einspruch: **23.07.2014**
(45) Hinweis auf die Patenterteilung: 16.07.2008
(21) Anmeldenummer: 04787050.6
(22) Anmeldetag: 29.09.2004
(51) Int. Cl.: B29C 63/10, B29C 53/80, F16L 25/00

(54) **VORRICHTUNG ZUM HERSTELLEN EINER VERSTÄRKUNG AN EINEM KUNSTSTOFFROHR**
METHOD AND DEVICE FOR APPLYING A REINFORCEMENT TO A PLASTIC PIPE BY WAY OF A WRAP WELDING PROCESS
PROCEDE ET DISPOSITIF POUR APPLIQUER UN RENFORT SUR UN TUBE DE PLASTIQUE AU MOYEN D'UN PROCEDE DE SOUDURE A ENVELOPPEMENT

(30) Priorität: 22.12.2003 DE 10360471
(43) Veröffentlichungstag der Anmeldung: 06.09.2006
(73) Patentinhaber: Siegfried Meyer Bakum GmbH & Co. KG, 49456 Bakum (DE)
(72) Erfinder: HETZNER, Claus, 90513 Zirndorf (DE); KRIEGER, Hubert, 82319 Starnberg (DE); SHAFFER, William, Powell, OH 43065 (US)
(74) Vertreter: Meyer, Ludgerus
(86) Internationale Anmeldenummer: PCT/EP2004/010890
(87) Internationale Veröffentlichungsnummer: WO 2005/063465

(56) Entgegenhaltungen:
- WO-A-00/46005
- WO-A-03/035364
- WO-A-03/040604
- US-A- 4 171 834
- US-A- 4 559 974
- US-A- 5 072 972
- PATENT ABSTRACTS OF JAPAN Bd. 016, Nr. 549 (M-1338), 18. November 1992 (1992-11-18) & JP 04 208439 A (YUUSHII SANGIYOU KK), 30. Juli 1992 (1992-07-30)

## Beschreibung

Die vorliegende Erfindung betrifft eine Vorrichtung zum Herstellen einer Verstärkung an einem Kunststoffrohr.

Im Stand der Technik sind Verfahren und Vorrichtungen zu Herstellen von verstärkten Muffen an Kunststoffrohren wie zum Beispiel aus der WO 03/040604 bekannt. So ist aus der DE 101 52 604 A1 bekannt, ein Kunststoffrohr mit einem Ende auf einen Stützdorn aufzuschieben und zusammen mit dem Stützdorn um seine Längsachse zu drehen, wobei während der Drehung auf einen vorgeformten Muffenbereich des Rohres eine Kunststoffschicht aufextrudiert wird, die eine verstärkende, an das Kunststoffrohr angeformte Muffe bildet. Dieses Verfahren bewirkt zwar eine Verstärkung des Kunststoffrohres gegenüber einmaligen statischen Belastungen. Eine Verstärkung gegenüber statischen Dauerbelastungen mit der Folge, dass auch ein Kriechens des Kunststoffes vermieden wird, wird aber nur kaum erreicht. Eine solche Dauerbelastung findet vor allem im Dichtungsbereich von Muffen statt, wenn ein weiteres Kunststoffrohr in die Muffe eingeschoben ist, und eine Ringdichtung von innen mit großem Druck gegen die Muffe presst. Dieser Druck kann auf Dauer ein Kriechen des Kunststoffrohres verursachen mit der Folge von Undichtigkeiten im Muffenbereich.

Es ist daher eine Aufgabe der vorliegenden Erfindung, eine Vorrichtung zum Herstellen einer Verstärkung an einem Kunststoffrohr bereitzustellen, bei dem eine verbesserte Belastbarkeit gegenüber Dauerbelastungen gegeben ist, um ein Kriechen des Kunststoffes zu vermeiden.

Diese Aufgabe wird durch eine Vorrichtung gemäß Anspruch 1 gelöst. Die abhängigen Ansprüche betreffen vorteilhafte Ausgestaltungen der Erfindung.

Die Ausführungsbeispiele der Erfindung werden nachstehend anhand der folgenden Zeichnungen näher erläutert.
- Fig. 1: zeigt ein Kunststoffrohr mit einer verstärkten Muffe;
- Fig. 2: zeigt ein erstes Ausführungsbeispiel einer Vorrichtung zum Herstellen einer Verstärkung an einem Kunststoffrohr;
- Fig. 3: zeigt ein zweites Ausführungsbeispiel einer Vorrichtung zum Herstellen einer Verstärkung an einem Kunststoffrohr;
- Fig. 4: zeigt ein drittes Ausführungsbeispiel einer Vorrichtung zum Herstellen einer Verstärkung an einem Kunststoffrohr;
- Fig. 5: zeigt ein viertes Ausführungsbeispiel einer Vorrichtung zum Herstellen einer Verstärkung an einem Kunststoffrohr;
- Fig. 6: zeigt einen vergrößerten Ausschnitt des ersten bzw. des zweiten Ausführungsbeispiels;
- Fig. 7: zeigt einen vergrößerten Ausschnitt des dritten bzw. des vierten Ausführungsbeispiels;
- Fig. 8: zeigt eine Einrichtung zum Abstützen und Drehen eines Kunststoffrohres für das erste bzw. dritte Ausführungsbeispiel;
- Fig. 9 und 10: zeigt eine erfindungsgemäße Vorrichtung;

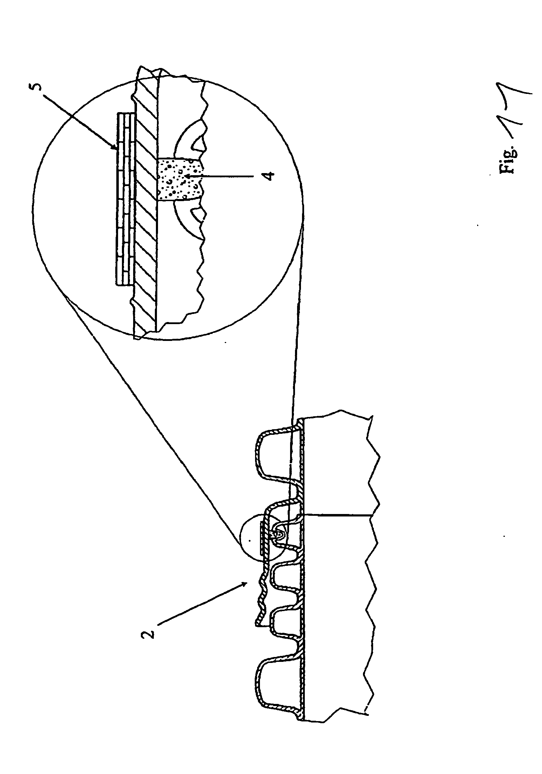

- Fig. 11: zeigt eine verstärkte Muffe nach der vorliegenden Erfindung;

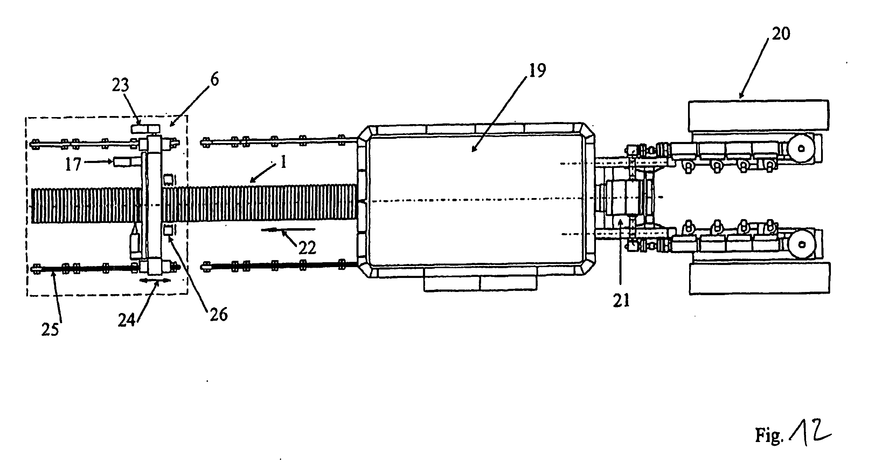

- Fig. 12: zeigt eine Vorrichtung nach der vorliegenden Erfindung, die stromabwärts von einer Wellrohranlage mit Extruder angeordnet ist.

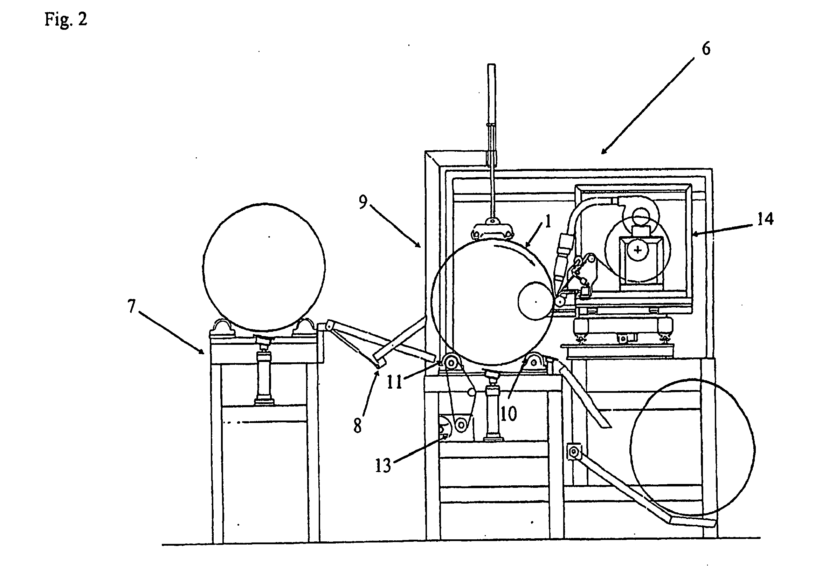

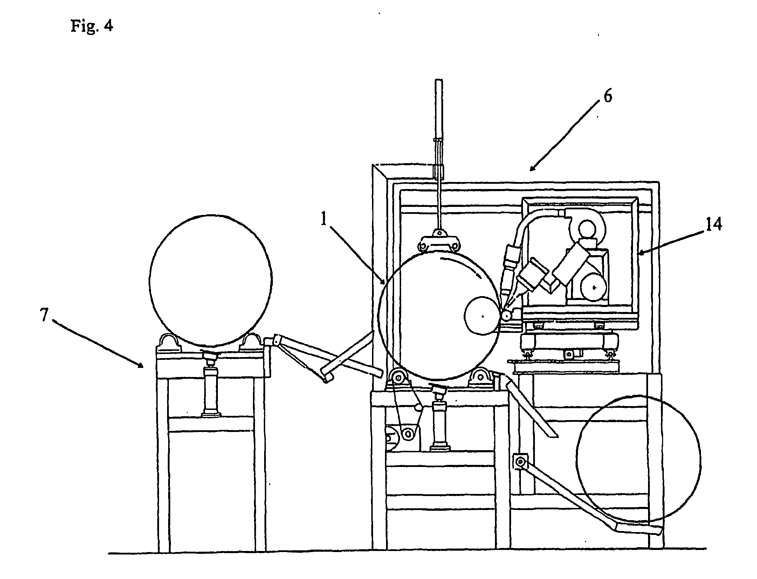

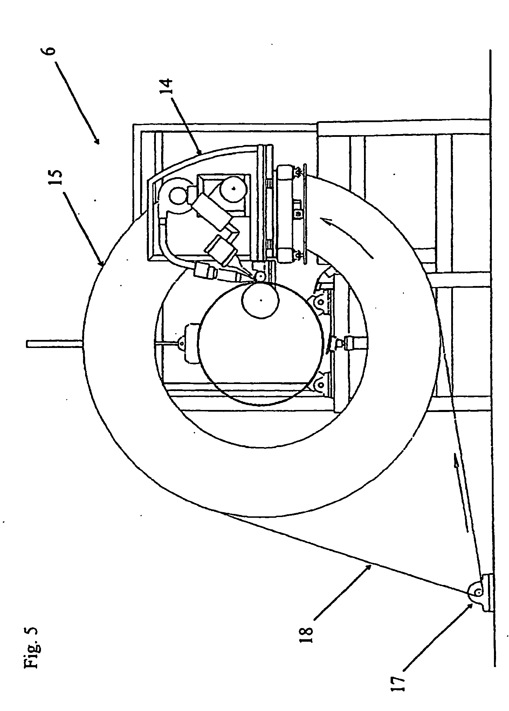

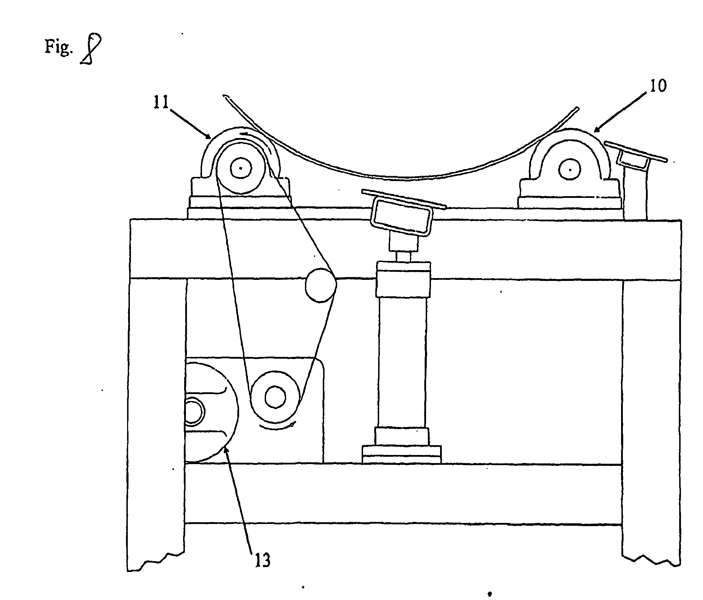

Hierbei sind die in den Figuren 2 - 8 gezeigten Vorrichtungen nicht erfindungsgemäße Ausführungen

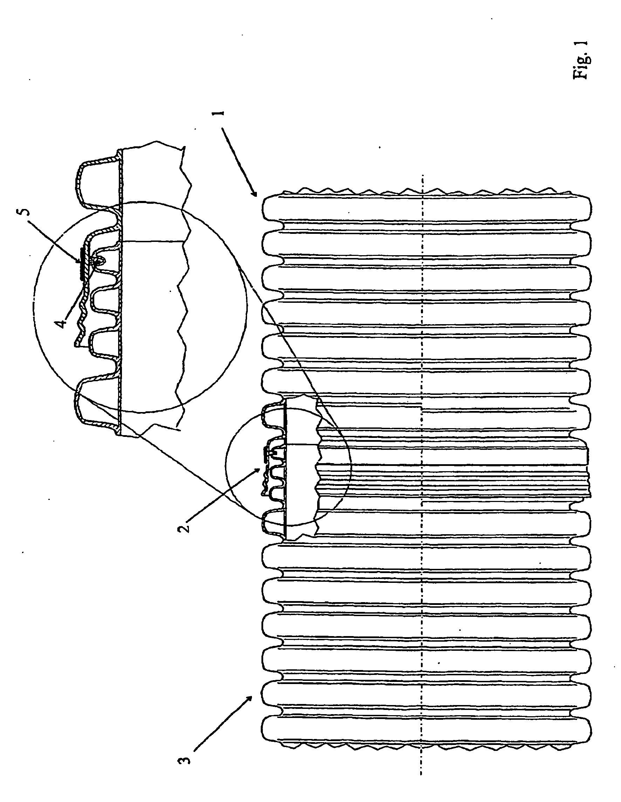

In Fig. 1 ist ein Kunststoffrohr 1 mit einer gewellten Außenwandung und einer glatten Innenwandung dargestellt. Das Kunststoffrohr 1 weist eine Muffe bzw. Anschlussstelle 2 auf zur Verbindung mit einem weiteren Kunststoffrohr 3, wobei die Anschlussstelle 2 durch eine Dichtung 4 abgedichtet ist. In dem Bereich der Dichtung 4 weist die Anschlussstelle 2 des Kunststoffrohrs 1 ein Verstärkungsband 5 auf, das nicht nur eine Verstärkung gegenüber einmaligen statischen Belastungen bietet, sondern auch eine Verstärkung gegenüber statischen Dauerbelastungen, um ein Kriechen der Anschlussstelle 2 im Bereich der Dichtung 4 zu verhindern.

Das Verstärkungsband 5 besteht aus Kunststoff, insbesondere aus thermoplastischem Kunststoff, z.B. das Material des Kunststoffrohres, high-density Polyethylen (HDPE) oder Polypropylen (PP), und umfasst einen oder mehrere Verstärkungswerkstoffe, die eine hohe und dauerhafte Zugfestigkeit aufweisen, insbesondere Naturfasern, Kunststofffasern, Kunststofffäden, Glasfasern, Fiberglasfasern, Kevlarfasern, Kohlefasern, Metallfasern oder Metalldrähte. Besonders vorteilhaft ist es dabei, einfache oder geflochtene Fäden aus diesen Verstärkungswerkstoffen bzw. Gewebe aus diesen Verstärkungswerkstoffen zu verwenden. Vor allem flache Metallgewebe haben sich als besonders geeignetes Verstärkungsmaterial herausgestellt. Denn das Metallgeweben weist nicht nur eine hohe dauerhafte Zugfestigkeit auf, sondern erzeugt eine relativ geringe Flächenpressung gegen das Kunststoffrohr, so dass ein Einschneiden vermieden wird, wenn das Verstärkungsmaterial mit Vorspannung auf das Kunststoffrohr aufgebracht wird.

Die Verstärkungswerkstoffe sind dabei vorteilhaft in Längsrichtung des Verstärkungsbandes ausgerichtet und können einseitig auf dem Kunststoff des Verstärkungsbandes aufgebracht sein. Vorteilhaft ist es jedoch, wenn die Verstärkungswerkstoffe beidseitig mit Kunststoff kaschiert sind bzw. im Kunststoff eingebettet sind. Durch die vorgeschlagenen Verstärkungswerkstoffe wird eine bisher nicht erreichte Widerstandsfähigkeit gegenüber statischen Dauerbelastungen erreicht, so dass ein Kriechens des Kunststoffes von Rohren im Dichtungsbereich von Muffen verhindert werden kann. Die Verwendung von geflochtenen Stahlseilen und Metallgeweben ist dabei besonders vorteilhaft. Somit wird es ermöglicht, bei Kunststoffrohre mit über 2 Metern Durchmessern eine dauerhafte Abdichtung zu gewährleisten.

Das Verstärkungsband 5 kann einmal um die Anschlussstelle 2 herumgewickelt sein, wobei der Anfang und das Ende des Verstärkungsbandes 5 miteinander verbunden werden. Vorteilhaft ist es jedoch, das Verstärkungsband - wie in Fig. 13 angedeutet ist - mehrmals übereinander zu umwickeln, um einen Selbsthemmungseffekt zu erreichen. Das Verstärkungsband 5 kann dabei spiralförmig und/oder überlappend um die Anschlussstelle 2 gewickelt sein, wobei der Endbereich des aufgewickelten Verstärkungsbandes direkt mit der Anschlussstelle oder mit der darunter liegenden Wicklung des Verstärkungsbandes 5 verschweißt ist. Das Verstärkungsband 5 wird vorteilhaft durch Hitzeeinwirkung mit der Anschlussstelle 2 verschweißt.

Das Verstärkungsband 5 kann durch ein im folgenden beschriebenen Wickelschweißverfahren auf die Anschlussstelle 2 aufgebracht werden.

Fig. 2 zeigt ein erstes Ausführungsbeispiel einer Vorrichtung 6 zum Herstellen eines Verstärkungsbandes an einem Kunststoffrohr 1. Im linken Teil der Fig. 2 ist eine Zuführvorrichtung 7 dargestellt, wird ein Kunststoffrohr mit Hilfe von Hebelarmen 8 in die Arbeitsstellung 9 der erfindungsgemäßen Vorrichtung 6 zu überführen, die in der Mitte der Fig. 2 dargestellt ist. Alternativ zu dem in Fig. 2 gezeigten Hebelarmen 8 kann auch ein Hub-Querförderer verwendet werden. Das Kunststoffrohr 1 wird in der Arbeitsstellung 9 durch Stützrollen 10, 11 sowie durch obere Anpressrollen 12 gehalten,
wobei die Stützrolle 11 durch einen Motor 13 angetrieben wird, um das Kunststoffrohr 1 drehen zu können. Die Vorrichtung 6 weist weiter eine Einrichtung zum Förderern eines Verstärkungsbandes 5 und eine Einrichtung zum Verschweißen des Verstärkungsbandes 5 mit dem Kunststoffrohr 1 auf, die in Fig. 2 gemeinsam mit dem Bezugszeichen 14 versehen sind.

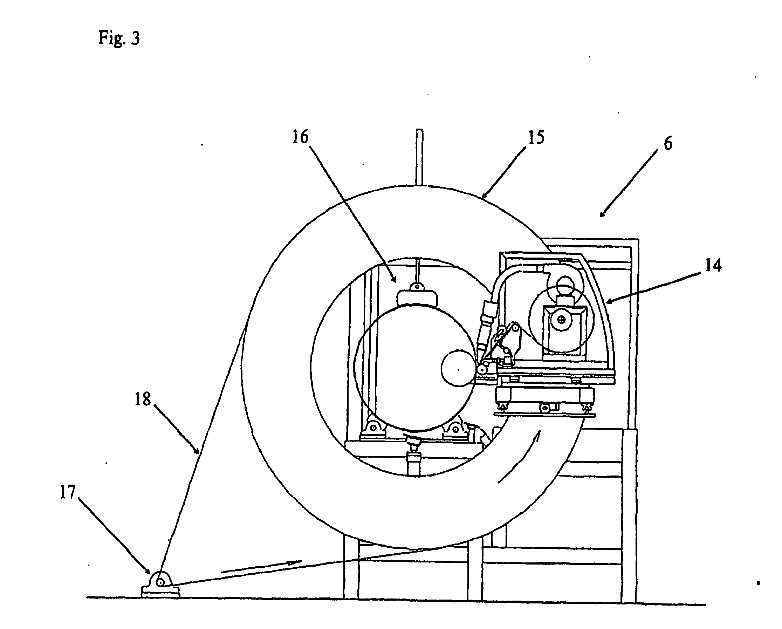

In Fig. 2 sind die Einrichtungen 14 stationär in der Vorrichtung 6 angeordnet, wobei das Aufwickeln des Verstärkungsbandes 5 durch ein- oder mehrmaliges Drehen des Kunststoffrohres 1 erreicht wird. Wie in Fig. 3 gezeigt ist, ist es jedoch auch möglich, die Einrichtungen 14 um das Kunststoffrohr 1 einmal oder mehrmals herumzuführen, wobei das Kunststoffrohr 1 in einer Klemmvorrichtung 16 fest eingespannt bleibt. Diese Drehbewegung der Einrichtungen 14 kann erreicht werden, indem diese mit Hilfe eines Drehkranzes bzw. Rotors 15, der durch einen Motor 17 angetrieben wird, gedreht werden. In Fig. 3 ist der Rotor 15 mit dem Motor 17 über einen Keilriemen bzw. Antriebsband 18 verbunden. Es ist jedoch auch möglich, den Motor 17 direkt an der Vorrichtung 6 anzubringen, wobei ein am Motor angebrachtes Ritzel direkt mit Zähnen am Außenumfang des Rotors 15 in Eingriff steht.

Die Einrichtungen 14 müssen bei dieser Ausführungsform mindestens um etwa 360° gedreht werden können. Vorteilhaft ist es jedoch, wenn mehrfache Drehungen um das Kunststoffrohr 1 möglich sind. Der Antrieb der Einrichtungen 14 kann reversibel erfolgen, um eine leichtere Versorgung durch Verbindungskabel zu ermöglichen, bei festem Anschluss die nicht beliebig oft um das Kunststoffrohr umwickelt werden können.

Der besondere Vorteil der Drehbewegung der Einrichtungen 14 um das Kunststoffrohr 1 besteht darin, dass somit die erfindungsgemäße Vorrichtung 6 unmittelbar stromabwärts von einer Wellrohranlage bzw. Corrugator 19 angeordnet sein kann, wie in Fig. 14 dargestellt ist. Der Corrugator 19 wird von einem Extruder 20, der einen Spritzkopf 21 aufweist, mit plastifiziertem Kunststoff gespeist zur Herstellung eines Kunststoffrohres 1. Bei diesem Herstellungsprozess ist es nicht möglich das Kunststoffrohr 1 zu drehen. Daher wird es mit der erfindungsgemäßen Vorrichtung 6 mit drehenden Einrichtungen 14 erstmals ermöglicht, ein Verstärkungsband 5 unmittelbar nach der Formstrecke eines Corrugators 19 anzubringen, so dass die Rohrherstellung insgesamt effizienter und bei kleinerem Raumbedarf erfolgen kann.

Da sich das Kunststoffrohr 1 bei seiner Herstellung langsam entlang der Formstrecke bewegt (vgl. Pfeil 22 in Fig. 14), ist es vorteilhaft, wenn die Vorrichtung 6 entlang von Schienen 25 mit Hilfe eines Motors 23 synchron mit der Produktionsgeschwindigkeit des Kunststoffrohres 1 bewegt werden kann. Für eine exakte Bearbeitung ist dabei von Vorteil, eine Klemmvorrichtung 26 vorzusehen. Während des erfinderischen Wickelschweißvorganges bewegt sich die Vorrichtung 6 somit von dem stromaufwärtigen Ende der Schienen 25 zum stromabwärtigen Ende der Schienen 25. Danach wird die Vorrichtung 6 mit Hilfe des Motors 23 wieder an sein stromaufwärtiges Ende gefahren, um die nächste Anschlussstelle 2 mit einem Verstärkungsband 5 zu versehen. Dabei sei erwähnt, dass Kunststoffrohre in einem Endlosverfahren hergestellt werden mit eingearbeiteten Anschlussstellen, wobei das Kunststoffrohr nach dessen Herstellung mit der gewünschten Länge an der Anschlussstelle abgetrennt bzw. abgelängt wird, um einzelne Rohrstücke zu erhalten.

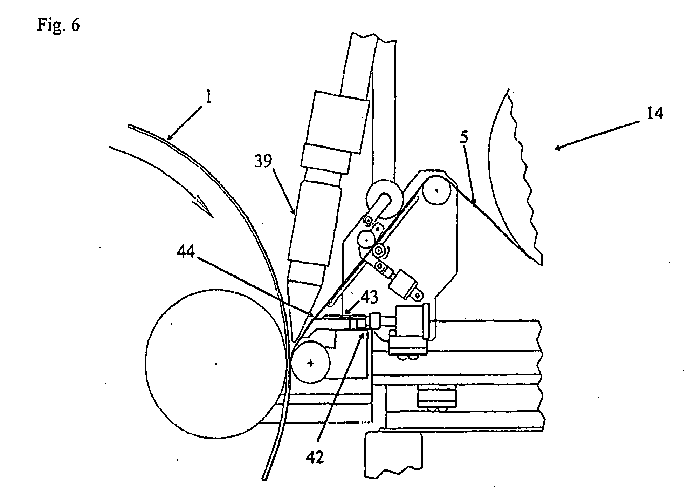

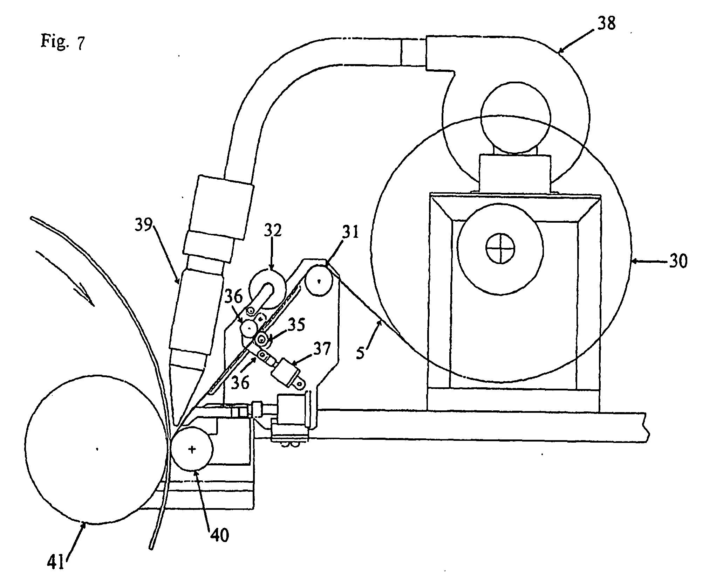

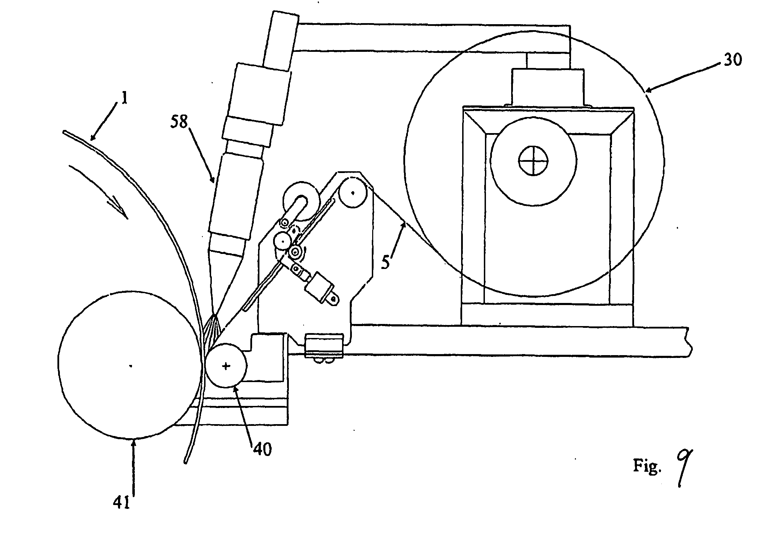

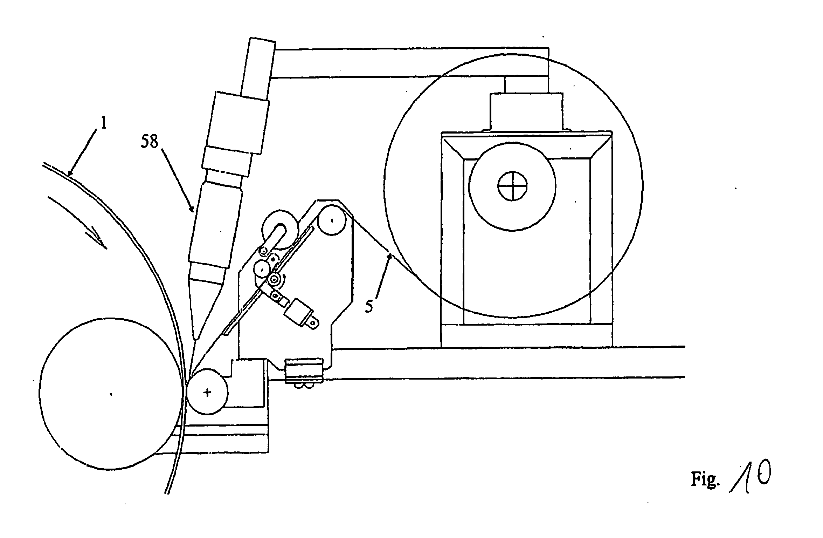

In Fig. 6 sowie in den Fig. 9 und 10 sind verschiedene Ausführungsmöglichkeiten für Einrichtungen 14 zum Herstellen bzw. Aufbringen des Verstärkungsbandes 5 dargestellt. In Fig. 7 ist eine Trommel 30 dargestellt, auf welcher das Verstärkungsband 5 aufgewickelt ist. Das Verstärkungsband 5 wird über eine Umlenkrolle 31 und eine Anpressrolle 32 einer Antriebsvorrichtung 33 zugeführt, welche das Verstärkungsband 5 von der Trommel 30 abwickelt, um es einem Arbeitsbereich 34 am Kunststoffrohr 1 zuzuführen. Die Antriebseinheit 33 weist eine angetriebene Rolle 35 und eine Gegenrolle 36 auf, die durch einen Pneumatik- oder Hydraulikzylinder 37 gegen die angetriebene Rolle 35 gedrückt wird. Der Arbeitsbereich 34 wird durch ein Heißluftgebläse 38 mit einer Heißluftdüse 39 aufgeheizt, um das Kunststoffrohr 1 örtlich zu plastifizieren. Durch die erzeugte Heißluft wird außerdem der Kunststoff des Verstärkungsbandes 5 plastifiziert, so dass eine Verschweißung des Verstärkungsbandes 1 mit dem Kunststoffrohr 1 erreicht wird, indem die nachfolgenden Anpressrollen 40, 41 das Verstärkungsband 5 gegen das Kunststoffrohr 1 drücken.

In Fig. 6 ist eine Schneidevorrichtung 42 der Einrichtung 14 genauer zu sehen, die ein Schneidemesser 43 aufweist. Wenn das Verstärkungsband 5 mit der gewünschten Länge um das Kunststoffrohr 1 gewickelt wurde, wird das Schneidemesser 43 durch einen Zylinder nach links verschoben um das Verstärkungsband 5 abzutrennen. Das Verstärkungsband 5 wird dabei durch ein Gegenblech 44 festgehalten. Der Endbereich des abgetrennten Endes des Verstärkungsbandes 5 wird daraufhin durch das Heißluftgebläse und die Anpressrollen 40, 41 mit dem darunter liegenden Bereich des Verstärkungsbandes verschweißt.

Ein Ausführungsbeispiel einer Einrichtung 14 gemäß der Erfindung ist in den Fig. 9 und 10 dargestellt. Im Gegensatz zu dem in Fig. 7 dargestellten Ausführungsbeispiel wird hier das Verstärkungsband und das Kunststoffrohr 1 mittels eines Lasers 58 plastifiziert und dann durch Anpressrollen 40, 41 miteinander verbunden. Der besondere Vorteil der Verwendung eines Lasers besteht darin, dass der zu plastifizierende Kunststoff sehr gezielt erwärmt werden kann, so dass die gesamte Hitzeeinwirkung geringer ist im Vergleich zu der Verwendung eines Heißluftgerätes. Wie in Fig. 10 dargestellt ist, kann der Laser durch Bündelung des Strahles auch zum Schneiden des Verstärkungsbandes 5 verwendet werden, so dass die Anzahl der erforderlichen Einrichtungen reduziert wird.

Bei allen oben dargestellten Ausführungsbeispielen ist es vorteilhaft, wenn das Verstärkungsband bzw. Verstärkungsmaterial mit einer Vorspannung auf das Kunststoffrohr aufgebracht wird. Beim Aufwickeln kann daher - je nach Kunststoffrohrdurchmesser und Verstärkungsgrad - eine Zugspannung von mehr als 100 N bis 1000 N auf das Verstärkungsband bzw. Verstärkungsmaterial aufgebracht werden. Dies kann erreicht werden, indem die Einrichtung zum Drehen das Verstärkungsband bzw. Verstärkungsmaterial mit Zugspannung abwickelt, wobei entweder die entsprechende Trommel oder das Verstärkungsband bzw. Verstärkungsmaterial selbst kontrolliert mittels einer Rückhaltevorrichtung gebremst wird.

Bei den oben dargestellten Ausführungsbeispielen ist es auch denkbar, dass Verstärkungsband 5 nur nach vorbestimmten Längen jeweils mit dem Kunststoffrohr 1 zu verschweißen. Dadurch wird der Energiebedarf und die dementsprechende Hitzebelastung weiter reduziert, wobei die Verstärkung des Kunststoffrohres 1 gegenüber einer statischen Dauerbelastung praktisch nicht beeinträchtigt wird.

Bei den oben dargestellten Ausführungsbeispielen ist es vorteilhaft, eine Computersteuerung vorzusehen zum Steuern der einzelnen Motoren, der Schneidevorrichtung, der Heizeinrichtungen bzw. des Lasers und der sonstigen Einrichtungen, um einen vollautomatischen Betrieb zu ermöglichen.

## Patentansprüche

1. Vorrichtung zum Herstellen einer Verstärkung an einem Kunststoffrohr (1) mit einer Haltevorrichtung zum Halten eines Kunststoffrohres, welches mindestens eine Anschlussstelle (2) zur Verbindung mit einem anderen Kunststoffrohr (3) oder einem anderen Verbindungsstück aufweist, wobei die Vorrichtung umfasst eine Einrichtung zum Fördern eines Verstärkungsbandes (5) aus Kunststoff und einem oder mehreren Verstärkungsmaterialien (47) sowie eine Einrichtung zum Aufwickeln des Verstärkungsbandes (5) auf die Anschlussstelle des Kunststoffrohres insbesondere auf den Dichtungsbereich der Anschlussstelle, und wobei
die Vorrichtung aufweist ein Lasergerät (58)
a) zum Plastifizieren des Kunststoffrohres (1) und des Verstärkungsbandes (5), wobei das Kunststoffrohr (1) und das Verstärkungsband (5) durch Anpressrollen (40, 41) miteinander verbunden werden,
b) zum Schneiden des Verstärkungsbandes (5), und
c) zum Verschweißen des Endbereichs des Verstärkungsbandes (5) mit dem Anfangsbereich des Verstärkungsbandes (5).

2. Vorrichtung gemäß Anspruch 1, **dadurch gekennzeichnet, dass** die Einrichtung zum Aufwickeln des Verstärkungsbandes (5) geeignet ist, das Kunststoffrohr (1) relativ zu der Einnchtung zum Fördern des Verstärkungsbandes zu drehen, und insbesondere mindestens zwei Stützwalzen (10, 11) aufweist, auf denen das Kunststoffrohr aufliegt, wobei mindestens eine der Stützwalzen durch einen Motor (13), insbesondere einen Servomotor, angetrieben wird

3. Vorrichtung gemäß einem der vorherigen Ansprüche, **dadurch gekennzeichnet, dass** die Einrichtung zum Aufwickeln des Verstärkungsbandes eine Führung oder einen Rotor (15) aufweist, mit deren Hilfe die Einrichtung zum Fördern des Verstärkungsbandes durch einen Motor, insbesondere einen Elektro- bzw. Servomotor, gedreht werden kann, wobei diese Bewegung insbesondere reversibel erfolgen kann, so dass zu Beginn eines Zyklus die Einrichtung zum Fördern des Verstärkungsbandes an die Ausgangsposition zurückgefahren werden kann.

4. Vorrichtung gemäß einem der vorherigen Ansprüche, **dadurch gekennzeichnet, dass** die Vorrichtung ein Lasergerät (58) aufweist, welches in einer festen Beziehung zu der Einrichtung zum Fördern des Verstarkungsbandes angeordnet ist, und welches bewirkt, dass das Verstärkungsband derart mit der Anschlussstelle verschweißt werden kann, dass nur der innere Bereich des Verstärkungsbandes und der Bereich der Anschlussstelle, mit welchem dieser innere Bereich des Verstärkungsbandes verschweißt werden soll, plastifiziert und angeschmolzen wird, bevor die Verschweißung erfolgt.

5. Vorrichtung gemäß einem der vorherigen Ansprüche, **dadurch gekennzeichnet, dass** die Vorrichtung eine Profilwalze (40) aufweist, mit welcher das aufgebrachte Verstärkungsband kalibriert und/oder geglättet werden kann.

6. Vorrichtung gemäß einem der vorherigen Ansprüche, **dadurch gekennzeichnet, dass** die Vorrichtung weder eine Kühlungseinrichtung noch einen Stützdorn, welcher die Anschlussstelle vom Inneren des Kunststoffrohres her abstützt, aufweist.

7. Vorrichtung gemäß einem der vorherigen Ansprüche, **dadurch gekennzeichnet, dass** die Vorrichtung eine Computersteuerung umfasst insbesondere zur Steuerung der Drehbewegung, der Trennung des Verstarkungsbandes und der Verschweißung sowie ggf zum automatischen Antransport bzw. Abtransport des bearbeiteten Rohres.

## Claims

1. Device for producing a reinforcement on a plastic pipe (1), said device having a holding device for holding a plastic pipe, which pipe has at least one connecting point (2) for connection to another plastic pipe (3) or to another connecting piece, wherein said device comprises an apparatus for conveying a reinforcing tape (5) made of plastic and of one or more reinforcing materials (47), as well as an apparatus for winding the reinforcing tape (5) onto the connecting point of the plastic pipe, in particular onto the sealing region of said connecting point, and wherein
the device has a laser appliance (58) for:
a) plasticizing the plastic pipe (1) and the reinforcing tape (5), wherein said plastic pipe (1) and said reinforcing tape (5) are connected to one another by pressure-applying rollers (40, 41);
b) cutting the reinforcing tape (5); and
c) welding the end region of the reinforcing tape (5) to the initial region of said reinforcing tape (5).

2. Device according to Claim 1, **characterised in that** the apparatus for winding on the reinforcing tape (5) is suitable for rotating the plastic pipe (1) relative to the apparatus for conveying the reinforcing tape and, in particular, has at least two supporting rolls (10, 11) on which the plastic pipe rests, at least one of said supporting rolls being driven by a motor (13), in particular a servomotor.

3. Device according to one of the previous claims, **characterised in that** the apparatus for winding on the reinforcing tape has a guide or a rotor (15), with the aid of which the apparatus for conveying the reinforcing tape can be rotated by a motor, in particular an electric motor or servomotor, it being possible, in particular, for this movement to take place reversibly, so that, at the beginning of a cycle, the apparatus for conveying the reinforcing tape can be moved back to the starting position.

4. Device according to one of the previous claims, **characterised in that** the device has a laser appliance (58) which is arranged in a fixed relationship to the apparatus for conveying the reinforcing tape and which brings about the possibility of the reinforcing tape being welded to the connecting point in such a way that only the inner region of the reinforcing tape, and that region of the connecting point to which this inner region of the reinforcing tape is to be welded, are plasticized and melted on before the welding operation takes place.

5. Device according to one of the previous claims, **characterised in that** the device has a profile roll (40), by means of which the reinforcing tape that has been applied can be calibrated and/or smoothed.

6. Device according to one of the previous claims, **characterised in that** the device has neither a cooling apparatus nor a supporting mandrel that supports the connecting point from the inside of the plastic pipe.

7. Device according to one of the previous claims, **characterised in that** the device comprises a computer control system, in particular for controlling the rotating movement, the severing of the reinforcing tape and the welding operation, as well as, optionally, for automatically transporting in and transporting away the pipe which is being processed.

## Revendications

1. Dispositif de fabrication d'un renfort sur un tube en matière plastique (1), comprenant un dispositif de maintien pour maintenir un tube en matière plastique comportant au moins un point de raccordement (2) à relier à un autre tube en matière plastique (3) ou à une autre pièce de liaison, le dispositif comprenant un système pour amener une bande de renfort en matière plastique (5) et un ou plusieurs matériaux de renfort (47), ainsi qu'un système pour enrouler la bande de renfort (5) sur le point de raccordement du tube en matière plastique, en particulier sur la zone de joint du point de raccordement, et le dispositif comportant un appareil laser (58)
a) pour plastifier le tube en matière plastique (2) et la bande de renfort (5),le tube en matière plastique et la bande de renfort (5) étant reliées entre elles par des rouleaux presseurs (40, 41),
b) pour couper la bande de renfort (5), et
c) pour souder la zone de fin de la bande de renfort (5) avec la zone de début de la bande de renfort.

2. Dispositif selon la revendication 1, **caractérisé en ce que** le système pour enrouler la bande de renfort (5) est apte à tourner le tube en matière plastique (1) par rapport au système pour amener la bande de renfort et comporte en particulier au moins deux rouleaux d'appui (10, 11) sur lesquels repose le tube en matière plastique, au moins un des rouleaux d'appui étant entraîné par l'intermédiaire d'un moteur (1), en particulier d'un servomoteur.

3. Dispositif selon l'une des revendications précédentes, **caractérisé en ce que** le système pour enrouler la bande de renfort comporte un guide ou un rotor (15) permettant de tourner le système pour amener la bande de renfort par l'intermédiaire d'un moteur, en particulier d'un moteur électrique ou d'un servomoteur, ce mouvement pouvant s'effectuer en particulier de manière réversible, de sorte qu'au début d'un cycle le système pour amener la bande de renfort peut être amené en position initiale.

4. Dispositif selon l'une des revendications précédentes, **caractérisé en ce que** le dispositif comporte un appareil laser (58) qui est disposé en relation fixe par rapport au système pour amener la bande de renfort et qui fait en sorte que la bande de renfort puisse être soudée avec le point de raccordement, de façon que seules la zone intérieure de la bande de renfort et la zone du point de raccordement avec laquelle cette zone intérieure de la bande de renfort doit être soudée soient plastifiées et fondues avant que n'intervienne le soudage.

5. Dispositif selon l'une des revendications précédentes, **caractérisé en ce que** le dispositif comporte un rouleau profilé (40) permettant de calibrer et/ou de lisser la bande de renfort appliquée.

6. Dispositif selon l'une des revendications précédentes, **caractérisé en ce que** le dispositif ne comporte ni dispositif de refroidissement ni mandrin d'appui soutenant le point de raccordement par l'intérieur du tube en matière plastique.

7. Dispositif selon l'une des revendications précédentes, **caractérisé en ce que** le dispositif comprend une commande informatisée, en particulier pour commander le mouvement de rotation, le sectionnement de la bande de renfort et le soudage et, le cas échéant, pour amener ou évacuer automatiquement le tube traité.
